(19) Europäisches Patentamt
European Patent Office
Office européen des brevets

(11) **EP 4 733 442 A1**

(12) **EUROPEAN PATENT APPLICATION**
published in accordance with Art. 153(4) EPC

(43) Date of publication:
**29.04.2026 Bulletin 2026/18**

(21) Application number: **23941830.4**

(22) Date of filing: **23.06.2023**

(51) International Patent Classification (IPC):
**C25B 9/00** *(2021.01)* **C25B 1/04** *(2021.01)*
**C25B 11/052** *(2021.01)*

(52) Cooperative Patent Classification (CPC):
**C25B 1/04; C25B 9/00; C25B 11/052**

(86) International application number:
**PCT/JP2023/023433**

(87) International publication number:
**WO 2024/262047 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **PANASONIC INTELLECTUAL PROPERTY MANAGEMENT CO., LTD.**
**Kadoma-shi, Osaka 571-0057 (JP)**

(72) Inventors:
• **NAKAUE, Takayuki**
**kadoma-shi, Osaka 571-0057 (JP)**

• **MURASE, Hideaki**
**kadoma-shi, Osaka 571-0057 (JP)**
• **HAYASHI, Takao**
**kadoma-shi, Osaka 571-0057 (JP)**
• **ASAZAWA, Koichiro**
**kadoma-shi, Osaka 571-0057 (JP)**
• **KANI, Yukimune**
**kadoma-shi, Osaka 571-0057 (JP)**

(74) Representative: **Eisenführ Speiser Patentanwälte Rechtsanwälte PartGmbB Gollierstraße 4 80339 München (DE)**

(54) **WATER ELECTROLYSIS ELECTRODE, WATER ELECTROLYSIS CELL, WATER ELECTROLYSIS DEVICE, AND METHOD FOR MANUFACTURING WATER ELECTROLYSIS ELECTRODE**

(57) A water electrolysis electrode 1 includes a conductive substrate 11 and a layered double hydroxide layer 12. The layered double hydroxide layer 12 is disposed on a surface of the conductive substrate 11. The layered double hydroxide layer 12 includes two or more transition metals. The layered double hydroxide layer 12 includes a chelating agent.

FIG.1

## Description

TECHNICAL FIELD

The present disclosure relates to a water electrolysis electrode, a water electrolysis cell, a water electrolysis device, and a method for manufacturing a water electrolysis electrode.

BACKGROUND ART

Water electrolysis electrodes have been known.
Patent Literature 1 describes a method for manufacturing a water electrolysis electrode, and the method including a step of immersing an electrode substrate in an organic solvent, where the electrode substrate includes a predetermined layered double hydroxide. In this manufacturing method, the electrode substrate is manufactured by performing an electrodeposition process in an aqueous solution including a compound including a metal M1 and a compound including a metal M2, by use of a conductive substrate as an anode.
Patent Literature 2 describes a cathode for aqueous solution electrolysis, including a conductive substrate having a nickel surface, a mixed layer, and an electrode catalyst layer. The mixed layer is formed on a surface of the conductive substrate and includes metallic nickel, nickel oxide, and carbon atoms. The electrode catalyst layer is disposed on the mixed layer and includes a platinum group metal or a platinum group metal compound.
In Non Patent Literature 1, activity of oxygen evolution reaction (OER) of a Ni-Fe layered double hydride (Ni-Fe LDH) electrode is examined.
In Non Patent Literature 2, it is described that the local electronic structure of Ni-Fe LDH is adjusted by an interfacial interaction between FeOOH and the Ni-Fe LDH, which enhances the OER electrode-catalytic activity.

CITATION LIST

Patent Literature

   Patent Literature 1: JP 2020-12171 A
   Patent Literature 2: JP 2021-139027 A

Non Patent Literature

   Non Patent Literature 1: Seyeong Lee et al, "Operational durability of three-dimensional Ni-Fe layered double hydroxide electrocatalyst for water oxidation," Electrochimica Acta, 2019, Vol. 315, p. 94-101
   Non Patent Literature 2: Jiande Chen et al, "Interfacial Interaction between FeOOH and Ni-Fe LDH to Modulate the Local Electronic Structure for Enhanced OER Electrocatalysis," ACS Catalysis, 2018, Vol. 8, p. 11342-11351

SUMMARY OF INVENTION

Technical Problem

The descriptions in the above literatures need to be reconsidered from the viewpoint of improvement of performance of water electrolysis electrodes. Therefore, the present disclosure provides a novel water electrolysis electrode advantageous from the viewpoint of exhibiting high performance.

Solution to Problem

The present disclosure provides a water electrolysis electrode including:

   a sheet-shaped conductive substrate; and
   a layered double hydroxide layer including two or more transition metals and disposed on a surface of the conductive substrate, wherein
   the layered double hydroxide layer includes a chelating agent.

Advantageous Effects of Invention

According to the present disclosure, it is possible to provide a novel water electrolysis electrode advantageous from the viewpoint of exhibiting high performance.

BRIEF DESCRIPTION OF DRAWINGS

FIG. 1 is a cross-sectional view schematically showing a water electrolysis electrode according to a first embodiment.
FIG. 2 is a diagram schematically showing an example of a crystal structure of a layered double hydroxide (LDH).
FIG. 3 is a diagram schematically showing a mechanism in manufacturing a water electrolysis electrode according to the first embodiment.
FIG. 4 is a cross-sectional view schematically showing an example of a water electrolysis cell according to a second embodiment.
FIG. 5 is a cross-sectional view schematically showing an example of a water electrolysis device according to a third embodiment.
FIG. 6 is a cross-sectional view schematically showing an example of a water electrolysis cell according to a fourth embodiment.
FIG. 7 is a cross-sectional view schematically showing an example of a water electrolysis device according to a fifth embodiment.
FIG. 8 is a transmission electron microscope (TEM) image of an electrode according to Example 1.
FIG. 9A is a TEM image showing a part in the electrode according to Example 1, for which a result of an electron diffraction analysis was obtained.
FIG. 9B is an electron diffraction image obtained by TEM for the part of the electrode shown in FIG. 9A.
FIG. 10 is a TEM image of an electrode according to Example 2.
FIG. 11A is a TEM image showing a part in the electrode according to Example 2, for which a result of an electron diffraction analysis was obtained.
FIG. 11B is an electron diffraction image obtained by TEM for the part of the electrode shown in FIG. 11A.
FIG. 12 is a TEM image of an electrode according to Comparative Example 2.
FIG. 13A is a TEM image showing a part in the electrode according to Comparative Example 2, for which a result of an electron diffraction analysis was obtained.
FIG. 13B is an electron diffraction image obtained by TEM for the part of the electrode shown in FIG. 13A.
FIG. 14 is a graph showing a measurement result for OER overpotential of the electrode according to Example 1.
FIG. 15 is a graph showing a measurement result for OER overpotential of the electrode according to Example 2.
FIG. 16 is a graph showing a measurement result for OER overpotential of the electrode according to Example 3.
FIG. 17 is a graph showing a measurement result for OER overpotential of the electrode according to Example 4.
FIG. 18 is a graph showing a measurement result for OER overpotential of the electrode according to Example 5.
FIG. 19 is a graph showing a relation between the OER overpotential and the number of cycles for the electrodes according to Examples 1 and 2 and the electrodes according to Comparative Examples 2 and 3.
FIG. 20 is a Fourier transform infrared spectroscopy (FT-IR) chart of the electrode according to Example 5.

DESCRIPTION OF EMBODIMENTS

(Findings on which the present disclosure is based)

Use of renewable energy sources such as solar power and wind power has been attracting attention as a measure against global warming. Power generation using renewable energy sources may lead to a problem of surplus electricity being wasted. For this reason, the efficiency of renewable energy use is not necessarily sufficient. Therefore, methods of making effective use of surplus electricity by producing and storing hydrogen using surplus electricity are being considered.

Electrolysis of water is a possible method for producing hydrogen using surplus electricity. In order to produce hydrogen affordably and stably, there is a demand for development of a highly efficient, long-life water electrolysis device.

In a water electrolysis device, oxygen is evolved at the anode and hydrogen is evolved at the cathode. The reaction in which oxygen is evolved at the anode may be called an anode reaction, and the reaction in which hydrogen is evolved at the cathode may be called a cathode reaction. In order to provide a highly efficient water electrolysis device, it is desirable that the overpotential is low, especially at the anode. In addition, it is desirable that the overpotential is low at the cathode as well. Therefore, there is a demand for development of a high-performance electrode for the anode reaction or the cathode reaction of water electrolysis.

For example, an LDH is considered to be a promising material for water electrolysis electrodes from the viewpoint of its large specific surface area and various combinations of metal ions. According to Patent Literature 1, an electrode substrate including a certain layered double hydroxide is produced by electrodeposition treatment in an aqueous solution containing a compound including a metal M1 and a compound including a metal M2, using a conductive substrate as an anode. Such a method requiring such electrodeposition treatment may be regarded as complicated. As a result of diligent studies, the inventors have newly found that the performance of the water electrolysis electrode is enhanced by a layer including LDH and a predetermined component, and the inventors have completed the water electrolysis electrode of the present disclosure.

Embodiments of the present disclosure are described below with reference to the attached drawings. The present disclosure is not limited to the following embodiments. The embodiments described below are all intended to provide comprehensive or specific examples. Therefore, the numerical values, the shapes, the materials, the components, the arrangement or the positions of the components, the connection forms or the like shown in the following embodiments are simply intended to demonstrate examples, but are not intended to limit the present disclosure. Among the components in the following embodiments, the components that are not described in the independent claims indicating the highest-level concept are described as optional components. Descriptions of components with the same reference numerals in the drawings may be omitted. The drawings show each component schematically to facilitate understanding, so that the shapes, the dimensional ratios and the like may not be accurately depicted. As for the manufacturing method, the order of the steps may be changed as necessary, and known steps may be added.

(First embodiment)

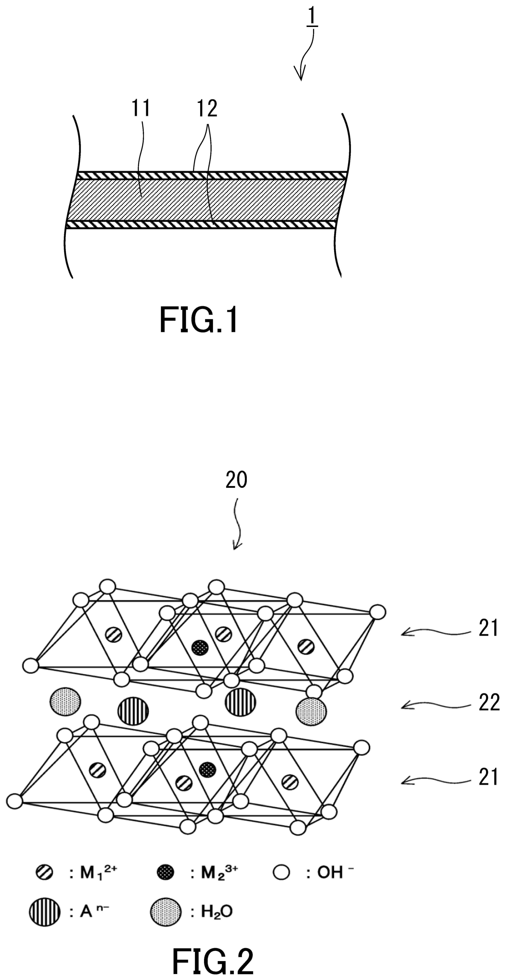

FIG. 1 is a cross-sectional view schematically showing a water electrolysis electrode according to a first embodiment. As shown in FIG. 1, a water electrolysis electrode 1 includes a sheet-shaped conductive substrate 11 and a layered double hydroxide (LDH) layer 12. The LDH layer 12 is disposed on a surface of the conductive substrate 11. The LDH layer 12 can function as a catalyst for an anode reaction or a cathode reaction in a water electrolysis. The LDH layer 12 is bonded to the conductive substrate 11. Specifically, the LDH layer 12 is bonded directly to the surface of the conductive substrate 11 without interposing therebetween an adhesive including an organic material such as a polymer. The LDH layer 12 includes an LDH including two or more transition metals and a chelating agent. This allows the chelating agent to adjust the crystal growth of the LDH to be reduced during the formation of the LDH layer 12, making it easier for the LDH layer 12 including the LDH bonded to the surface of the conductive substrate 11 to be present in a desired state. Therefore, the electrode activity of the water electrolysis electrode 1 is likely to be high, and the water electrolysis electrode 1 can exhibit high performance.

The conductive substrate 11 is not limited to any particular substrate as long as it has electric conductivity. The conductive substrate 11 may include a metal, or it may include a resin. The entire conductive substrate 11 may be composed of a metal. The conductive substrate 11 may have a structure in which a surface layer including a metal is formed on a member of a resin such as polypropylene or polyethylene. In this case, the surface layer including the metal may be a plated film or a sputtered film. The metal included in the conductive substrate 11 may be a pure metal such as nickel, or an alloy such as stainless steel or Inconel. Inconel is a registered trademark.

The surface of the conductive substrate 11 is preferably composed of nickel. In this case, the conductive substrate 11 is likely to have high alkaline resistance. In the case where the surface of the conductive substrate 11 is formed of nickel, the entire conductive substrate 11 may be composed of nickel, or the conductive substrate 11 may have a surface layer formed of nickel. The surface layer is, for example, a sputtered film or a plated film.

In the case where the surface of the conductive substrate 11 is formed of nickel, purity of the nickel forming the surface is not limited to a specific value. The purity of the nickel forming the surface the conductive substrate 11 is, for example, 90 mass% or more. In this case, the conductive substrate 11 is more likely to have high alkaline resistance. The method for determining the purity of the nickel that forms the surface of the conductive substrate 11 is not limited to a specific method. The purity of the nickel that forms the surface of the conductive substrate 11 may be determined by an elemental analysis such as X-ray fluorescence spectroscopy (XRF) and energy dispersive X-ray spectroscopy (EDX). For example, the purity of the nickel may be determined by analyzing the extract obtained by completely dissolving the conductive substrate 11 in aqua regia using a method such as inductively coupled plasma atomic emission spectrometry (ICP-AES). In the case where the purity of the nickel is high, the purity of the nickel may be determined by comparing the specific gravity of the conductive substrate 11 with the specific gravity of pure nickel.

The purity of the nickel that forms the surface of the conductive substrate 11 is preferably 95 mass% or more, more preferably 97 mass% or more, even more preferably 98 mass% or more, and in particular 99 mass% or more.

The shape of the conductive substrate 11 is not limited particularly as long as it is a sheet shape. The conductive substrate 11 may have a non-porous structure, such as a plate or a foil, or it may have a porous structure, such as expanded metal, a mesh, a foamed body, or a non-woven fabric. The conductive substrate 11 preferably has a porous structure. In this case, the surface area of the conductive part of the conductive substrate 11 is likely to be large, and the escape of gas generated during the water electrolysis reaction is likely to be prevented.

The thickness of the conductive substrate 11 is not limited to a specific value. The conductive substrate 11 is, for example, 0.02 mm or more in thickness. In this case, the conductive substrate 11 can be handled easily. The thickness of the conductive substrate 11 is, for example, 10 mm or less, and preferably 1 mm or less.

FIG. 2 is a diagram schematically showing an example of the crystal structure of the LDH. An LDH 20 has activity for the generation of gases such as hydrogen and oxygen at the anode or the cathode of a water electrolysis cell. For example, in an alkaline water electrolysis, the LDH 20 can be converted into hydroxide through a water electrolysis reaction.

The LDH 20 has a composition represented by the following Formula (1), for example. In Formula (1), $M1^{2+}$ is a divalent transition metal ion. $M2^{3+}$ is a trivalent transition metal ion. $A^{n-}$ is an interlayer anion. x is a rational number that satisfies a requirement $0 < x < 1$. y is a number that corresponds to the required amount of charge balance. n is an integer. And m is a suitable rational number.

$$[M1^{2+}_{1-x}M2^{3+}_x(OH)_2][yA^{n-}\cdot mH_2O] \qquad \text{Formula (1)}$$

The two or more transition metals in the LDH 20 are not limited to specific transition metals. In other words, M1 and M2 in the composition shown in Formula (1) are not limited to specific transition metals. The two or more transition metals include at least two selected from the group consisting of V, Cr, Mn, Fe, Co, Ni, Cu, W, and Ru. In this case, the water electrolysis electrode 1 is likely to have high electrode activity.

Preferably, the two or more transition metals in the LDH 20 include at least one selected from the group consisting of Ni and Fe. In this case, the water electrolysis electrode 1 is more likely to have high electrode activity. In addition, the cost for producing the water electrolysis electrode 1 is likely to be lower.

The two or more transition metals in the LDH 20 include Ni and Fe, for example. In the composition shown in Formula (1), for example, M1 may be Ni and M2 may be Fe. In this case, the water electrolysis electrode 1 is more likely to have high electrode activity.

$A^{n-}$ as an interlayer anion may be an inorganic ion or an organic ion. Examples of the inorganic ion include $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion include $CH_3(CH_2)_nSO^{4-}$, $CH_3(CH_2)_nCOO^-$, $CH_3(CH_2)_nPO^{4-}$, and $CH_3(CH_2)_nNO^{3-}$. $A^{n-}$ can be inserted between layers of metal hydroxide together with water molecules. The charge and ion size of $A^{n-}$ are not limited to specific values. The LDH 20 may contain one kind of $A^{n-}$ or multiple kinds of $A^{n-}$.

As shown in FIG. 2, the LDH 20 has an $OH^-$ ion at each vertex of each octahedron centered on $M1^{2+}$ or $M2^{3+}$. The LDH 20 includes a metal hydroxide represented by $[M1^{2+}_{1-x}M2^{3+}_x(OH)_2]^{x+}$. The metal hydroxide has a layered structure in which the octahedra of the hydroxide share edges and are linked in two dimensions. Between the layers of the metal hydroxide, the anion $A^{n-}$ and water molecules are present. The layers of the metal hydroxide function as host layers 21, while a guest layer 22 containing an anion $A^{n-}$ and water molecules is arranged between the host layers 21. In other words, the LDH 20 as a whole has a sheet-like structure in which the host layers 21 of the metal hydroxide and the guest layer 22 with anion $A^{n-}$ and water molecules are laminated alternately. The LDH 20 has a structure in which some of $M1^{2+}$ contained in the metal hydroxide layer is replaced by $M2^{3+}$.

As described above, the LDH layer 12 includes a chelating agent. The chelating agent may coordinate with the transition metal ions included in the LDH 20. This allows the LDH 20 to be stably present in the LDH layer 12. Furthermore, this allows the LDH 20 to be synthesized to have a small particle diameter. In addition, since the LDH 20 nucleated on the surface of the conductive substrate 11 tends to grow slowly as crystals, the LDH layer 12 including the LDH 20 and being dense with few voids is likely to have the desired thickness relative to the conductive substrate 11. This makes it easier for the LDH layer 12 to effectively contribute to the anode reaction or the cathode reaction, and makes it easier for the water electrolysis electrode 1 to have high electrode activity.

The chelating agent is not limited to a specific chelating agent. The chelating agent is, for example, an organic compound capable of coordinating with a transition metal ion in the LDH 20. The chelating agent may be at least one selected from the group consisting of a bidentate organic ligand and a tridentate organic ligand. Examples of the chelating agents include β-diketone, β-ketoester, hydroxycarboxylic acid, and hydroxycarboxylate. Examples of the β-diketones include acetylacetone (ACAC), trifluoroacetylacetone, hexafluoroacetylacetone, benzoylacetone, tenoyl trifluoroacetone, dipyrrovalyl methane, dibenzoylmethane, and ascorbic acid. Examples of the β-keto esters include methyl acetoacetate, ethyl acetoacetate, allyl acetoacetate, benzyl acetoacetate, n-propyl acetoacetate, iso-propyl acetoacetate, n-butyl acetoacetate, isobutyl acetoacetate, tert-butyl acetoacetate, 2-methoxyethyl acetoacetate, and methyl 3-oxopentanoate. Examples of the hydroxycarboxylic acids and their salts include tartaric acid, citric acid, malic acid, gluconic acid, ferulic acid, lactic acid, glucuronic acid, and their salts.

The chelating agent preferably includes at least one selected from the group consisting of acetylacetone and a citrate. In this case, the water electrolysis electrode 1 is more likely to have high electrode activity. An example of the citrate is trisodium citrate.

The thickness of the LDH layer 12 is not limited to a specific value. The LDH layer 12 has a thickness of 35 nm or more, for example. With this configuration, the water electrolysis electrode 1 is more likely to have high electrode activity. The LDH layer 12 includes a portion having a thickness of 35 nm or more, for example. The thickness of the LDH layer 12 can be determined by, for example, a TEM observation of a cross-section of the water electrolysis electrode 1. The thickness of the LDH layer 12 is, for example, 213 nm or less.

The LDH layer 12 covers, for example, the surface of the conductive substrate 11. A coverage of the LDH layer 12 with regard to the surface of the conductive substrate 11 is not limited to a specific value. The coverage is preferably 99% or more. In this case, the water electrolysis electrode 1 is more likely to have high electrode activity. In addition, the water electrolysis electrode 1 is likely to have high durability.

The method for manufacturing the water electrolysis electrode 1 is not limited to a specific method. For example, the water electrolysis electrode 1 is manufactured by adjusting a solution with a conductive substrate 11 immersed therein to be alkaline, where the solution includes a chelating agent and two or more transition metal ions. According to this method, an LDH layer 12 including the LDH and the chelating agent can be formed on the surface of the conductive substrate 11 in a simplified manner.

The temperature of the solution when adjusting the solution to be alkaline is not limited to a specific temperature. For example, the temperature of the solution is 20°C $\pm$ 15°C. In this case, a water electrolysis electrode 1 having high electrode activity can be obtained easily.

The solvent of the solution may be water, an organic solvent, or a mixture of water and an organic solvent.

The method for manufacturing the water electrolysis electrode 1 preferably includes increasing the pH. This allows the LDH 20 to be formed on the surface of the conductive substrate 11 in a short period of time, whereby a water electrolysis electrode 1 having high electrode activity can be obtained easily. In addition, the thus manufactured water electrolysis electrode 1 is likely to have high durability.

The method of adjusting the solution to be alkaline is not limited to a specific method. For example, the solution may be adjusted to be alkaline by mixing the above-described solution with an alkaline solution. Alternatively, the solution may be adjusted to be alkaline by adding a pH booster to the solution. In this case, the pH booster is not limited to a specific compound. The pH booster is, for example, a compound having an epoxy group. Examples of the pH booster include propylene oxide, ethylene oxide, and butylene oxide.

When a pH booster having an epoxy group such as propylene oxide is added to the solution, in the presence of a nucleophile such as a chloride ion, the pH booster can capture hydrogen ions present in the solution, following the ring-opening reaction of the epoxy group. As a result, the pH of the solution rises, and the solution can be alkaline. The pH of the solution including the chelating agent and two or more transition metal ions is 1, for example. When the pH booster is added to the solution, the pH of the solution rises gradually from 1, for example, and eventually the solution can be alkaline. The final pH of the solution is, for example, in a range of 8 to 12. Addition of the pH booster to the solution promotes the reaction in which hydrogen ions in the solution is captured. Thereby, the pH of the solution gradually rises. The time period from the addition of the pH booster to the solution until the pH of the solution reaches a steady state is not limited to a specific time period. That time period can be, for example, more than 24 hours, or several days.

The two or more transition metal ions included in the solution are not limited to specific transition metal ions. The two or more transition metal ions contained in the solution are, for example, ions of at least two transition metals selected from the group consisting of V, Cr, Mn, Fe, Co, Ni, Cu, W, and Ru. In this case, the water electrolysis electrode 1 having high electrode activity is more easily manufactured.

The two or more transition metal ions included in the solution preferably include at least one transition metal ion selected from the group consisting of Ni and Fe. In this case, the water electrolysis electrode 1 having high electrode activity is more easily produced.

As described above, the surface of the conductive substrate 11 is preferably composed of nickel. In this case, for example, a water electrolysis electrode with favorable characteristics from the viewpoint of both corrosion resistance and conductivity in alkaline water electrolysis can easily be manufactured.

The conductive substrate 11 preferably includes nickel. The two or more transition metal ions in the solution desirably include Fe ions. The solution desirably includes chloride ions. In this case, the reaction indicated by Formula (2) can occur. Thereby, the conductive substrate 11 can be etched. The method for manufacturing the water electrolysis electrode 1 preferably includes promoting mixing of the solution before adjusting the solution to be alkaline in the state where the conductive substrate 11 is immersed in the solution. The promotion of mixing of the solution in the step (I) can be achieved, for example, by vibrating the conductive substrate 11, shaking the container in which the solution and the conductive substrate 11 are enclosed, or stirring the solution using a stirrer piece and a stirrer. With this method, a forced convection of the solution occurs, and mixing of the solution can be promoted. This allows the conductive substrate 11 to be etched in a desired state, and the LDH layer 12 can be formed in a desired state on the surface of the conductive substrate 11. As a result, the water electrolysis electrode 1 tends to have high durability. The mixing of the solution may be promoted while the container containing the solution and the conductive substrate 11 is sealed, or the mixing may be promoted in an

inert gas atmosphere.

$$4Ni^{2+} Cl^-_2 + 2Fe^{3+} Cl^-_3 + 2Ni \rightarrow 5Ni^{2+} Cl^-_2 + 2Fe^{2+} Cl^-_2 + 1Ni \qquad \text{Formula (2)}$$

In manufacturing the water electrolysis electrode 1, the molar ratio of the content of Fe ion to the content of Ni included in the conductive substrate 11 is not limited to a specific value. For example, the molar ratio is 0.75 or less. In this case, it is possible to prevent the nickel included in the conductive substrate 11 from dissolving to make it difficult to manufacture the water electrolysis electrode 1, where the dissolution may be caused by the reaction shown by Formula (2).

The molar ratio is preferably in a range of 0.05 to 0.25. In this case, the LDH layer 12 can be easily formed uniformly on the conductive substrate 11, and a water electrolysis electrode 1 with high electrode activity can be obtained easily.

In manufacturing the water electrolysis electrode 1, a value obtained by dividing the content of the Fe ion on a molar basis by the surface area of the conductive substrate 11 is not limited to a specific value. For example, this value is 0.29 $mmol/cm^2$ or less. In this case, it is possible to prevent the nickel included in the conductive substrate 11 from dissolving to make it difficult to manufacture the water electrolysis electrode 1, where the dissolution may be caused by the reaction represented by Formula (2).

In manufacturing the water electrolysis electrode 1, the above-described value, which is obtainable by dividing the content of Fe ions on a molar basis by the surface area of the conductive substrate 11, is preferably in a range of 0.01 $mmol/cm^2$ to 0.1 $mmol/cm^2$. In this case, an LDH layer 12 is easily formed on the surface of the conductive substrate 11, and a water electrolysis electrode 1 having high electrode activity is easily obtained.

The chelating agent included in the solution may be selected with reference to the above examples of the chelating agents to be included in the LDH layer 12. The chelating agent included in the solution preferably includes at least one selected from the group consisting of acetylacetone and a citrate. This improves the dispersion stability of the complex in the solution and facilitates formation of the LDH layer 12 in the water electrolysis electrode 1 in the desired state. As a result, the water electrolysis electrode 1 is more likely to have high electrode activity.

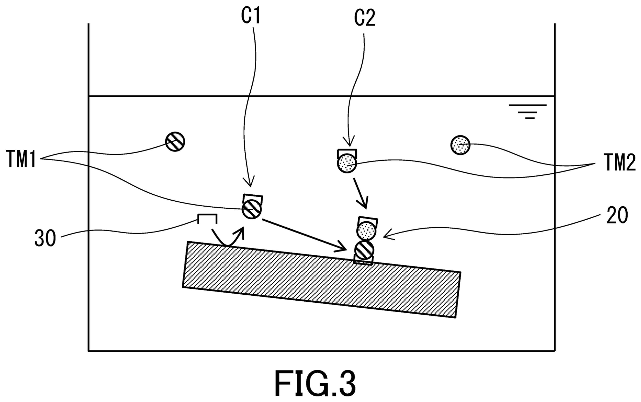

FIG. 3 is a diagram schematically showing an example of a mechanism in manufacturing a water electrolysis electrode according to the first embodiment. As shown in FIG. 3, a conductive substrate 11 is immersed in a solution that includes a transition metal ion TM1, a transition metal ion TM2, and a chelating agent 30. For example, the transition metal ion TM1 is a nickel ion and the transition metal ion TM2 is an iron ion. Furthermore, nickel is present on the surface of the conductive substrate 11. Some of the transition metal ion TM2 allows the nickel present on the surface of the conductive substrate 11 to be eluted by etching. Some of the chelating agent 30 reacts with the surface of the conductive substrate 11, and a complex C1 is formed from the transition metal ion TM1 derived from the conductive substrate 11 and the chelating agent 30. In addition, when the solution is adjusted to be alkaline, a complex C1 of the transition metal ion TM1 derived from the solution and the chelating agent 30 is formed, and a complex C2 of the transition metal ion TM2 and the chelating agent 30 is formed in the solution. Next, the complex C1 reacts with the complex C2 on the surface of the conductive substrate 11, and the LDH 20 is synthesized to coat the surface of the conductive substrate 11. Furthermore, since the complex C1 and the complex C2 include the chelating agent 30, the crystal growth of the LDH 20 is inhibited. As a result, an LDH layer 12 including the LDH 20 and the chelating agent 30 is formed on the surface of the conductive substrate 11, whereby a water electrolysis electrode 1 is obtained.

The water electrolysis electrode 1 according to the present embodiment can be used, for example, as the water electrolysis electrode in an alkaline water electrolysis device or an anion-exchange membrane type water electrolysis device. The water electrolysis electrode 1 is used, for example, in at least one selected from the group consisting of the anode and the cathode in the water electrolysis device. Thereby, the activity of the anode reaction or the cathode reaction in a water electrolysis is likely to increase.

(Second embodiment)

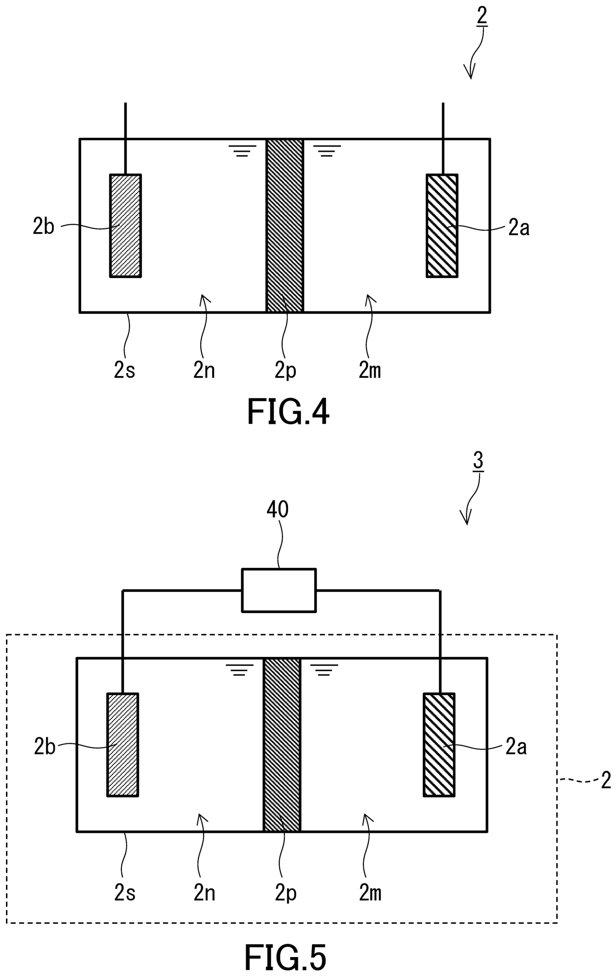

FIG. 4 is a cross-sectional view schematically showing an example of a water electrolysis cell according to a second embodiment. As shown in FIG. 4, a water electrolysis cell 2 includes an anode 2a, a cathode 2b, and a separator 2p. At least one selected from the group consisting of the anode 2a and the cathode 2b includes, for example, the water electrolysis electrode 1 according to the first embodiment. In this case, the activity of the anode reaction or the cathode reaction in the water electrolysis cell 2 is likely to increase, and the anode 2a or the cathode 2b is likely to exhibit high performance.

The water electrolysis cell 2 is, for example, an alkaline water electrolysis cell for which an alkaline aqueous solution is used. The alkaline aqueous solution used in the water electrolysis cell 2 is not limited to a specific alkaline aqueous solution. Examples of the alkaline aqueous solution include a potassium hydroxide aqueous solution and a sodium hydroxide aqueous solution.

As shown in FIG. 4, the water electrolysis cell 2, for example, includes an electrolytic cell 2s, a first chamber 2m, and a second chamber 2n. The separator 2p is disposed inside the electrolytic cell 2s and separates the interior of the electrolytic cell 2s into the first chamber 2m and the second chamber 2n. The anode 2a is disposed in the first chamber 2m, and the cathode 2b is disposed in the second chamber 2n.

The separator 2p is, for example, a separator for alkaline water electrolysis. The separator 2p is, for example, a sheet-shaped porous membrane. The separator 2p has a thickness, for example, in a range of 100 $\mu$m to 500 $\mu$m and has pores that serve as a passage for ions or an electrolytic solution. Materials for the separator 2p are not limited to a specific material. Examples of the material for the separator 2p include asbestos, polymer-reinforced asbestos, potassium titanate bonded with polytetrafluoroethylene (PTFE), zirconia bonded with PTFE, and antimonic acid and antimony oxide bonded with polysulfone. Other examples of materials for the separator 2p include sintered nickel, nickel coated with ceramics and nickel oxide, and polysulfone. The separator 2p may be Zirfon Perl UTP 500 manufactured by AGFA.

The anode 2a may be arranged in a state of zero gap, namely, in a state where the anode 2a is in contact with the separator 2p, or the anode 2a may be arranged in a state in which there is a gap between the anode 2a and the separator 2p. The cathode 2b may be arranged in a state being in contact with the separator 2p, or the cathode 2b may be arranged in a state in which there is a gap between the cathode 2b and the separator 2p.

The water electrolysis cell 2 electrolyzes an alkaline aqueous solution to produce hydrogen and oxygen. An aqueous solution including a hydroxide of an alkali metal or alkaline earth metal is supplied to the first chamber 2m. In addition, an alkaline aqueous solution may be supplied to the second chamber 2n. Electrolysis is carried out while an alkaline aqueous solution of a predetermined concentration is discharged from the first chamber 2m and the second chamber 2n, whereby hydrogen and oxygen are produced.

In the case where the anode 2a includes the water electrolysis electrode 1, the cathode 2b may include, for example, an electrode material known as a cathode for an alkaline water electrolysis cell.

In the water electrolysis cell 2, in the case where the cathode 2b includes the water electrolysis electrode 1, the anode 2a may include the electrode material known as the anode for the alkaline water electrolysis cell. In the water electrolysis cell 2, both the anode 2a and the cathode 2b may include the water electrolysis electrode 1.

With the above configuration, at least one selected from the group consisting of the anode 2a and the cathode 2b includes the water electrolysis electrode 1, and thus, the water electrolysis cell 2 can exhibit high performance.

(Third embodiment)

FIG. 5 is a cross-sectional view schematically showing an example of a water electrolysis device according to a third embodiment. As shown in FIG. 5, a water electrolysis device 3 includes the water electrolysis cell 2 according to the second embodiment and a voltage applicator 40. The voltage applicator 40 applies a voltage between the cathode 2b and the anode 2a. The water electrolysis device 3 is an alkaline water electrolysis device in which an alkaline aqueous solution is used.

The voltage applicator 40 is electrically connected to the anode 2a and the cathode 2b. The voltage applicator 40 causes the potential of the anode 2a to become higher than the potential of the cathode 2b. The voltage applicator 40 is not limited to a specific type of voltage applicator as long as the voltage applicator 40 is capable of applying a voltage between the anode 2a and the cathode 2b. The voltage applicator 40 may be a device to adjust the voltage applied between the anode 2a and the cathode 2b. In the case where the voltage applicator 40 is connected to a direct current power source such as a battery, a solar cell and a fuel cell, the voltage applicator 40 includes a DC/DC converter, for example. In the case where the voltage applicator 40 is connected to an alternating current power source such as a commercial power source, the voltage applicator 40 is equipped with an AC/DC converter, for example. The voltage applicator 40 may be an electric power type power source, for example. In the electric power type power source, the voltage to be applied between the anode 2a and the cathode 2b, and the current to flow between the anode 2a and the cathode 2b, are adjusted such that the electric power supplied to the water electrolysis device 3 will be a predetermined set value.

With the above configuration, the water electrolysis device 3 can exhibit high performance.

(Fourth embodiment)

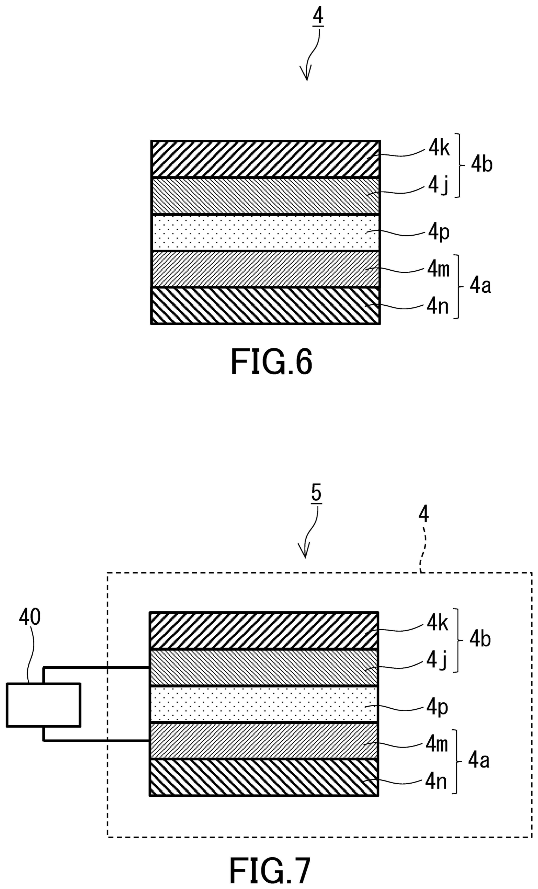

FIG. 6 is a cross-sectional view schematically showing an example of a water electrolysis cell according to a fourth embodiment. As shown in FIG. 6, a water electrolysis cell 4 includes an anode 4a, a cathode 4b, and an anion-exchange membrane 4p. In the water electrolysis cell 4, at least one selected from the group consisting of the anode 4a and the cathode 4b includes, for example, the water electrolysis electrode 1 according to the first embodiment. In this case, the activity of the anode reaction or the activity of the cathode reaction in the water electrolysis cell 4 is likely to increase, and the anode 4a or the cathode 4b is likely to exhibit high performance.

The water electrolysis cell is, for example, an anion-exchange membrane (AEM) type water electrolysis cell. As shown in FIG. 6, the anode 4a includes, for example, a catalyst layer 4m and a gas diffusion layer 4n. The cathode 4b includes, for example, a catalyst layer 4j and a gas diffusion layer 4k. The catalyst layer 4m of the anode 4a is in contact with one of the main surfaces of the anion-exchange membrane 4p, and the catalyst layer 4j of the cathode 4b is in contact with the other main surface of the anion-exchange membrane 4p.

The anion-exchange membrane 4p is not limited to a specific type of anion-exchange membrane. The anion-exchange membrane 4p has conductivity for anions such as hydroxide ions. The anion-exchange membrane 4p is capable of preventing mixing of the oxygen gas generated at the anode 4a with the hydrogen gas generated at the cathode 4b. The oxygen gas passes through the gas diffusion layer 4n and is led outside the anode 4a. The hydrogen gas passes through the gas diffusion layer 4k and is led outside the cathode 4b.

In the water electrolysis cell 4, in the case where the anode 4a includes the water electrolysis electrode 1, the cathode 4b may be a known cathode in an AEM-type water electrolysis cell. At this time, the LDH layer 12 of the water electrolysis electrode 1 may function as the catalyst layer 4m, and the conductive substrate 11 of the water electrolysis electrode 1 may function as the gas diffusion layer 4n.

In the water electrolysis cell 4, in the case where the cathode 4b includes the water electrolysis electrode 1, the anode 4a may be the known anode of the AEM-type water electrolysis cell. At this time, the LDH layer 12 of the water electrolysis electrode 1 may function as the catalyst layer 4j, and the conductive substrate 11 of the water electrolysis electrode 1 can function as the gas diffusion layer 4k. In the water electrolysis cell 4, both the anode 4a and the cathode 4b may include the water electrolysis electrode 1.

With the above configuration, at least one selected from the group consisting of the anode 4a and the cathode 4b includes the water electrolysis electrode 1, whereby the water electrolysis cell 4 can exhibit high performance.

(Fifth embodiment)

FIG. 7 is a cross-sectional view schematically showing an example of a water electrolysis device according to a fifth embodiment. As shown in FIG. 7, a water electrolysis device 5 includes a water electrolysis cell 4 and a voltage applicator 40. The voltage applicator 40 applies a voltage between a cathode 4b and an anode 4a. The water electrolysis device 5 is, for example, an AEM-type water electrolysis device.

The voltage applicator 40 is electrically connected to the anode 4a and to the cathode 4b. Due to the voltage applicator 40, the potential of the anode 4a becomes higher than the potential of the cathode 4b. The voltage applicator 40 is not limited to a specific type of voltage applicator as long as the voltage applicator 40 is capable of applying a voltage between the anode 4a and the cathode 4b. The voltage applicator 40 may be a device to adjust the voltage applied between the anode 4a and the cathode 4b. In the case where the voltage applicator 40 is connected to a direct current power source such as a battery, solar cell, or fuel cell, the voltage applicator 40 includes a DC/DC converter, for example. In the case where the voltage applicator 40 is connected to an alternating current power source such as a commercial power source, the voltage applicator 40 includes an AC/DC converter, for example. The voltage applicator 40 may be an electric power type power source, for example. In the electric power type power source, the voltage applied between the anode 4a and the cathode 4b and the current flowing between the anode 4a and the cathode 4b are adjusted such that the power supplied to the water electrolysis device 5 becomes a predetermined set value.

With the above configuration, the water electrolysis device 5 can exhibit high performance.

(Appendix)

The following techniques are disclosed based on the above description.

(Technique 1)

A water electrolysis electrode, including:

a sheet-shaped conductive substrate; and
a layered double hydroxide layer including two or more transition metals and disposed on a surface of the conductive substrate, wherein
the layered double hydroxide layer includes a chelating agent.

(Technique 2)

The electrode according to Technique 1, wherein
the two or more transition metals include at least two selected from the group consisting of V, Cr, Mn, Fe, Co, Ni, Cu, W, and Ru.

(Technique 3)

The electrode according to Technique 2, wherein
the two or more transition metals include at least one selected from the group consisting of Ni and Fe.

(Technique 4)

The electrode according to any one of Techniques 1 to 3, wherein
the chelating agent includes at least one selected from the group consisting of acetylacetone and a citrate.

(Technique 5)

The electrode according to any one of Techniques 1 to 4, wherein
the layered double hydroxide layer has a thickness of 35 nm or more.

(Technique 6)

The electrode according to any one of Techniques 1 to 5, wherein
the surface of the conductive substrate is composed of nickel,.

(Technique 7)

The electrode according to Technique 6, wherein
the nickel has purity of 90 mass% or more.

(Technique 8)

The electrode according to any one of Techniques 1 to 7, wherein
the conductive substrate has a porous structure.

(Technique 9)

A water electrolysis cell including:

    an anode;
    a cathode; and
    a separator, wherein
    at least one selected from the group consisting of the anode and the cathode includes the electrode according to any
    one of Techniques 1 to 8.

(Technique 10)

A water electrolysis cell including:

    an anode;
    a cathode; and
    an anion-exchange membrane, wherein
    at least one selected from the group consisting of the anode and the cathode includes the electrode according to any
    one of Techniques 1 to 8.

(Technique 11)

A water electrolysis device including:

    a water electrolysis cell according to Technique 9 or 10; and
    a voltage applicator configured to apply a voltage between the cathode and the anode.

(Technique 12)

A method for manufacturing a water electrolysis electrode, the method including:
adjusting a solution to be alkaline with a sheet-shaped conductive substrate immersed in the solution, where the solution includes a chelating agent and two or more transition metal ions.

(Technique 13)

The method according to Technique 12, including increasing pH of the solution.

(Technique 14)

The method according to Technique 12 or 13, wherein
the two or more transition metal ions include ions of two or more transition metals selected from the group consisting of V, Cr, Mn, Fe, Co, Ni, Cu, W, and Ru.

(Technique 15)

The method according to Technique 14, wherein
the two or more transition metal ions include an ion of at least one transition metal selected from the group consisting of Ni and Fe.

(Technique 16)

The method according to any one of Techniques 12 to 15, wherein
the surface of the conductive substrate is composed of nickel.

(Technique 17)

The method according to Technique 15 or 16, wherein

the conductive substrate includes nickel;
the two or more transition metal ions include an Fe ion;
the solution includes a chloride ion; and
the method further including promoting of mixing of the solution prior to adjustment of the solution to be alkaline with the conductive substrate immersed in the solution.

(Technique 18)

The method according to Technique 17, wherein
a molar ratio of a content of Fe ion to a content of Ni included in the conductive substrate is 0.75 or less.

(Technique 19)

The method according to Technique 17, wherein
a molar ratio of a content of Fe ion to a content of Ni included in the conductive substrate is in a range of 0.05 to 0.25.

(Technique 20)

The method according to Technique 17, wherein
a value obtained by dividing a content of Fe ion on a molar basis by a surface area of the conductive substrate is 0.29 $mmol/cm^2$ or less.

(Technique 21)

The method according to Technique 17, wherein
a value obtained by dividing a content of Fe ion on a molar basis by a surface area of the conductive substrate is in a range of 0.01 $mmol/cm^2$ to 0.1 $mmol/cm^2$.

(Technique 22)

The method according to any one of Techniques 12 to 21, wherein
the chelating agent includes at least one selected from the group consisting of acetylacetone and a citrate.

Examples

The present disclosure is further explained in detail by referring to Examples. The following Examples demonstrate a part of the present disclosure, and the present disclosure is not limited to the Examples.

(Example 1)

A mixed solvent was prepared by mixing 6.688 milliliters (mL) of water and 10.032 mL of ethanol. The ethanol was a product purchased from FUJIFILM Wako Pure Chemical Corporation. In the mixed solvent, a volume ratio of the water to the ethanol was 2:3. In this mixed solvent, 0.5685 g of nickel chloride hexahydrate and 0.3233 g of iron chloride hexahydrate were dissolved to prepare a solution. The nickel chloride hexahydrate and the iron chloride hexahydrate were products purchased from FUJIFILM Wako Pure Chemical Corporation. To this solution, 0.113 mL of acetylacetone (ACAC) as a chelating agent was added to obtain a chelating agent solution. The ACAC was a product purchased from Sigma-Aldrich Corporation. An amount of substance of the ACAC in the chelating agent solution was 1/3.25 of a total amount of substance of Ni ions and Fe ions. The chelating agent solution was acidic.

Five Ni meshes manufactured by Nilaco Corporation were washed with acetone for 10 minutes and then washed with a 1M HCl aqueous solution for 10 minutes for degreasing the Ni meshes and removing impurities. The Ni meshes each had a wire diameter of 0.1 mm, the number of meshes of a Ni mesh was 60, and each Ni mesh was shaped circular with a diameter of 15 mm in a plan view. The total weight of the five Ni meshes was 0.281 g. Next, the Ni meshes were washed with water and dried to complete the washing treatment of the Ni mesh.

After completion of the washing process, the Ni meshes were then immersed in the chelating agent solution described above. In this state, the chelating agent solution including the Ni meshes was shaken and stirred at 25°C for 24 hours. At this time, the outermost surface of the Ni mesh was etched in accordance with the above Formula (2). In this case, a molar ratio of the Fe ion content to the Ni content in the Ni mesh was 0.25. In addition, a value obtained by dividing the content of the Fe ions on a molar basis by the surface area of the Ni mesh was 0.0942 millimoles (mmol)/$cm^2$. The surface area of the Ni mesh was determined by taking into account the geometric shape of the Ni mesh based on the wire diameter, the mesh count and the diameter.

Next, 1.216 mL of propylene oxide (POX) as a pH booster was added to the chelating agent solution. The amount of POX added was adjusted such that a ratio of an amount of substance of the POX to an amount of substance of the chloride ions in the mixed solution was 2. The resulting mixed solution was shaken and stirred at 25°C for 72 hours. It is understood that during the shaking and stirring of the mixed solution, the POX gradually captured the hydrogen ions in the mixed solution, and that the pH of the mixed solution gradually increased and became alkaline. After 72 hours of shaking and stirring, the Ni meshes were collected, and the Ni meshes was washed with water and dried. In this way, the electrode according to Example 1 was obtained.

(Example 2)

An electrode according to Example 2 was prepared in the same way as in Example 1, except for the following points. A Ni mesh after completion of the washing process was placed in the aforementioned chelating agent solution, and immediately thereafter, POX was added to the chelating agent solution. In other words, in Example 2, the chelating agent solution including the Ni mesh was not shaken or stirred before the addition of POX.

(Example 3)

An electrode according to Example 3 was produced in the same way as in Example 1, except for the following points. In preparing a mixed solvent, 0.535 mL of water and 0.803 mL of ethanol were mixed. In the mixed solvent, a volume ratio of the water to the ethanol was 2:3. The amount of nickel chloride hexahydrate dissolved in the mixed solvent was 0.0455 g, and the amount of iron chloride hexahydrate dissolved in the mixed solvent was 0.0259 g. The amount of the ACAC added in the preparation of the chelating agent solution was 0.009 mL, and the amount of substance of the ACAC in the chelating agent solution was 1/3.25 of a total amount of substance of Ni ions and Fe ions. Two Ni meshes were used, and the total mass of the two Ni meshes was 0.112 g. The molar ratio of the content of Fe ions to the content of Ni in the Ni meshes during the shaking and stirring of the chelating agent solution including the Ni meshes was 0.05. In addition, a value obtained by dividing the content of Fe ions on a molar basis by the surface area of the Ni meshes was 0.0188

mmol/cm$^2$.

(Example 4)

An electrode according to Example 4 was prepared in the same way as Example 1, except for the following points. In preparing a mixed solvent, 6.900 mL of water and 10.351 mL of ethanol were mixed. In the mixed solvent, a volume ratio of the water to the ethanol was 2:3. The amount of nickel chloride hexahydrate dissolved in the mixed solvent was 5.8654 g, and the amount of iron chloride hexahydrate dissolved in the mixed solvent was 3.3351 g. The amount of the ACAC added in the preparation of the chelating agent solution was 1.164 mL, and the amount of substance of the ACAC in the chelating agent solution was 1/3.25 of the total amount of substance of Ni ions and Fe ions. Four Ni meshes were used, and the total mass of the four Ni meshes was 0.96 g. Each Ni mesh was a square with a side length of 20 mm in a plan view. The amount of the POX added to the chelating agent solution was 12.545 mL. A molar ratio of the content of Fe ions to the content of Ni in the Ni mesh during the shaking and stirring of the chelating agent solution including the Ni mesh was 0.75. In addition, a value obtained by dividing the content of Fe ions on a molar basis by the surface area of the Ni mesh was 0.2844 mmol/cm$^2$. An amount of the POX added was adjusted such that the ratio of the amount of substance of the POX to the amount of substance of the chloride ions in the mixed solution of the chelating agent solution and the POX would be 2.

(Example 5)

An electrode according to Example 5 was prepared in the same way as Example 1, except for the following points. The amount of nickel chloride hexahydrate dissolved in water was 0.336 g, and the amount of iron chloride hexahydrate dissolved in the water was 0.191 g. The amount of the ACAC added in the preparation of the chelating agent solution was 0.033 mL, and the amount of substance of the ACAC in the chelating agent solution was 1/3.25 of the total amount of substance of Ni ions and Fe ions. One Ni plate was used in place of a Ni mesh, and its mass was 0.335 g. The Ni plate had a circular shape with a diameter of 15 mm in a plan view. The amount of the POX added to the chelating agent solution was 3.63 mL. A molar ratio of the content of Fe ions to the content of Ni in the Ni plate during the shaking and stirring of the chelating agent solution including the Ni plate was 0.04. In addition, a value obtained by dividing the content of Fe ions on a molar basis by the surface area of the Ni plate was 0.073 mmol/cm$^2$. An amount of the POX added was adjusted such that the ratio of the amount of substance of the POX to the amount of substance of the chloride ions in the mixed solution of the chelating agent solution and the POX would be 2.

(Comparative Example 1)

A mixed solvent was prepared by mixing 6.900 mL of water and 10.351 mL of ethanol. The ethanol was a product purchased from FUJIFILM Wako Pure Chemical Corporation. In the mixed solvent, a volume ratio of the water to the ethanol was 2:3. In this mixed solvent, 5.8654 g of nickel chloride hexahydrate and 3.3351 g of iron chloride hexahydrate were dissolved to prepare a solution. The nickel chloride hexahydrate and the iron chloride hexahydrate were products purchased from FUJIFILM Wako Pure Chemical Corporation. To this solution, 1.164 mL of acetylacetone (ACAC) as a chelating agent was added to obtain a chelating agent solution. The ACAC was a product purchased from Sigma-Aldrich Corporation. The amount of substance of the ACAC in the chelating agent solution was 1/3.25 of the total amount of substance of the Ni ions and the Fe ions. The pH of the chelating agent solution was 1.

One Ni mesh manufactured by Nilaco Corporation was washed with acetone for 10 minutes and then washed with a 1 M HCl aqueous solution for 10 minutes for degreasing the Ni mesh and removing impurities. The Ni mesh had a wire diameter of 0.1 mm, the number of meshes of the Ni mesh was 60, and the Ni mesh was a square with a side length of 20 mm in a plan view. The weight of the Ni mesh was 0.25 g. Next, the Ni mesh was washed with water and dried to complete the washing process for the Ni mesh.

After completion of the washing process, the Ni mesh was then immersed in the chelating agent solution. In this state, the chelating agent solution including the Ni mesh was shaken and stirred at 25°C for 24 hours. At this time, in accordance with the reaction in the above Formula (2), the Ni mesh was entirely etched and dissolved. As a result, no evaluable electrode was obtained in Comparative Example 1. The molar ratio of the content of Fe ions to the content of Ni in the Ni mesh was 2.9. Further, a value obtained by dividing the content of Fe ions on a molar basis by the surface area of the Ni mesh was 1.0919 mmol/cm$^2$.

(Comparative Example 2)

The electrode according to Comparative Example 2 was prepared in the same way as in Example 1, except that ACAC was not used.

(Comparative Example 3)

Five Ni meshes were used as the electrodes according to Comparative Example 3, after completion of washing in the same way as in Example 1.

[Identification of electrode structure and morphological observation]

Samples for morphological observation were picked up and processed using a focused ion beam (FIB) system (FB-2200 manufactured by Hitachi High-Technologies Corporation). Next, the samples for morphological observation were sliced using FIB NX5000 manufactured by Hitachi High-Tech Science. The structure of the electrode according to each Example and each Comparative Example was identified, and the morphology of the electrode was observed, by performing a cross-sectional observation and an electron beam diffraction using a transmission electron microscope (TEM) JEM-F200 manufactured by JEOL Ltd. In this way, the states of the LDH in the electrodes according to Examples and Comparative Examples were evaluated.

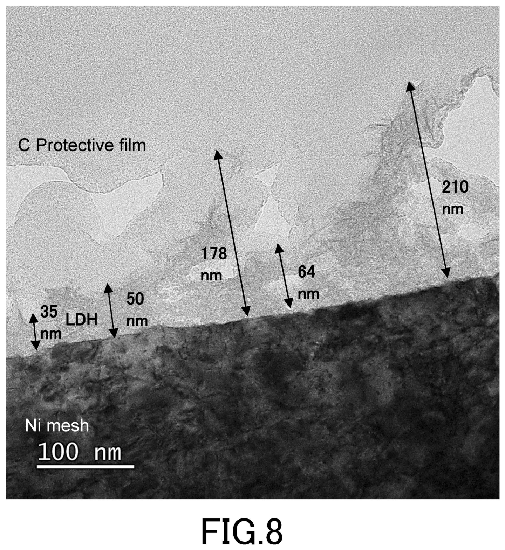

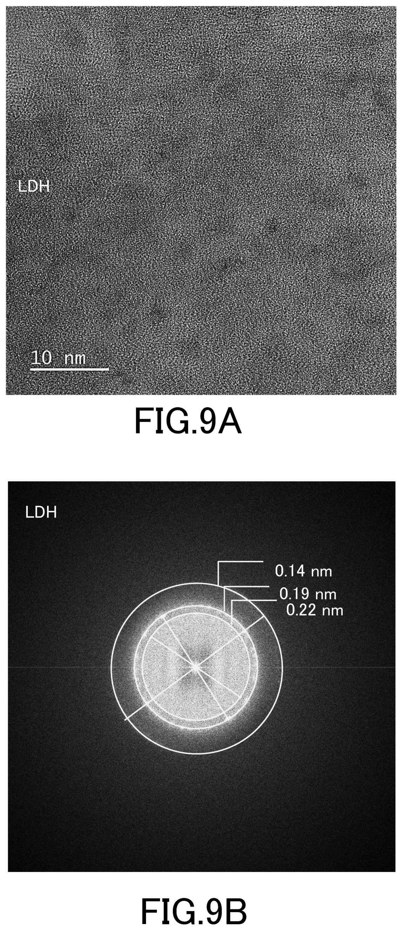

FIG. 8 is a transmission electron microscope (TEM) image of an electrode according to Example 1. FIG. 9A is a TEM image showing a part in the electrode according to Example 1, for which a result of an electron diffraction analysis was obtained. FIG. 9B is an electron diffraction image obtained by TEM for the part of the electrode shown in FIG. 9A. As shown in FIG. 8, it is understood that a predetermined layer is formed on the surface of the Ni mesh. This layer had a thickness of 35 nm or more. As shown in FIG. 9A and FIG. 9B, in electron diffraction of this layer, LDH-derived lattice spacings of 0.14 nm, 0.19 nm, and 0.22 nm were observed, and diffraction interference fringes consistent with (113), (015), and (012) of the LDH were observed, respectively. Thus, it was confirmed that a layer including the LDH was formed on the Ni mesh surface.

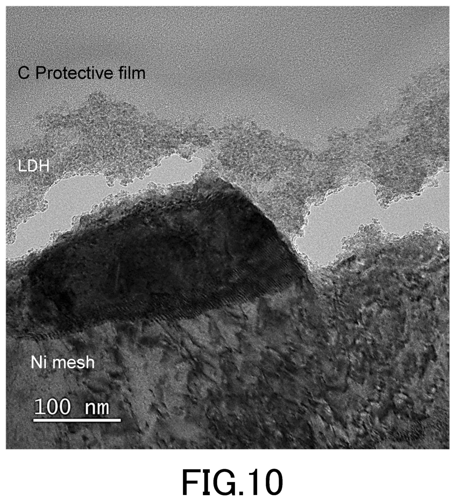

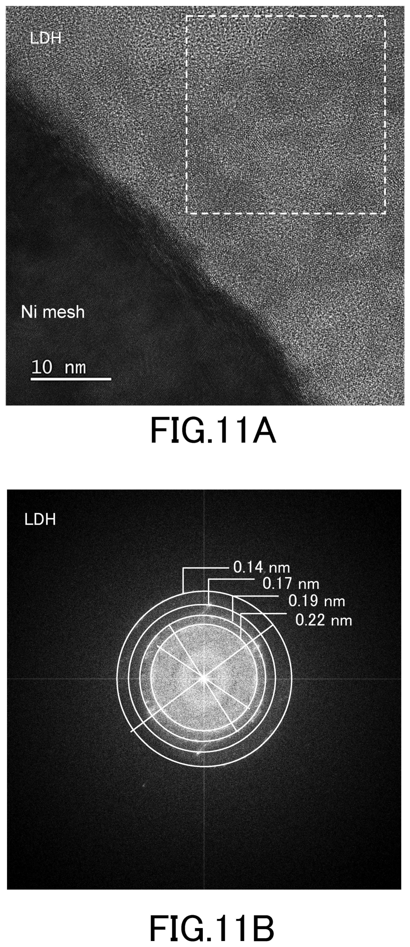

FIG. 10 is a TEM image of an electrode according to Example 2. FIG. 11A is a TEM image showing a part in the electrode according to Example 2, for which a result of an electron diffraction analysis was obtained. FIG. 11B is an electron diffraction image obtained by TEM for the part of the electrode shown in FIG. 11A. FIG. 11B shows an electron diffraction result obtained for the region indicated by the white broken line in FIG. 11A. As shown in FIG. 10, it is understood that an LDH is present on the surface of a part of the Ni mesh in the electrode according to Example 2. Further, as shown in FIG. 10, it is understood that the LDH layer has numbers of gaps. As shown in FIG. 11A and FIG. 11B, LDH-derived lattice spacings of 0.14 nm, 0.17 nm, 0.19 nm, and 0.22 nm were observed, and diffraction interference fringes consistent with (113), (110), (015), and (012) of the LDH were observed, respectively. Thus, it was confirmed that the LDH was present on the Ni mesh surface.

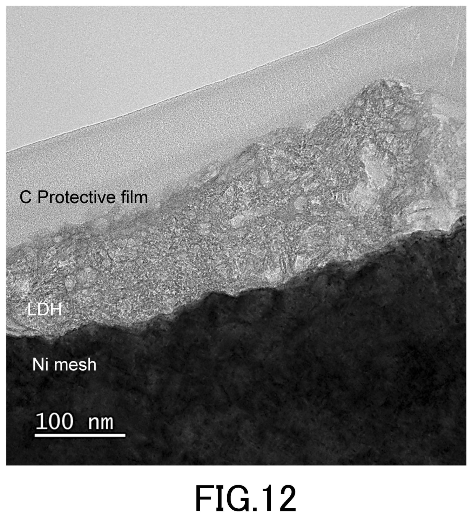

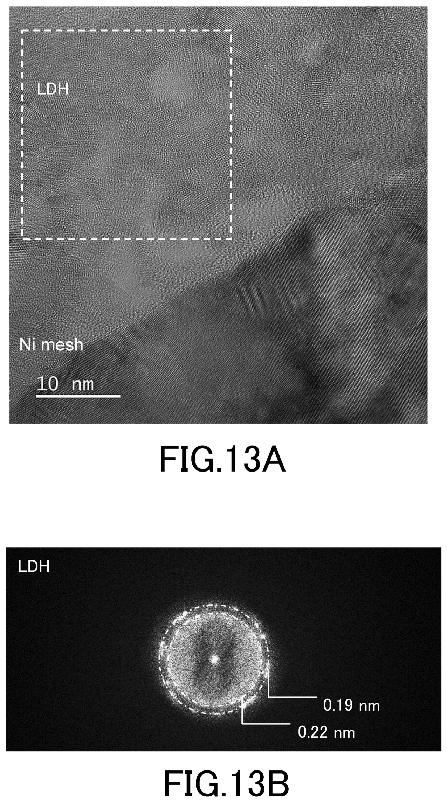

FIG. 12 is a TEM image of an electrode according to Comparative Example 2. FIG. 13A is a TEM image showing a part in the electrode according to Comparative Example 2, for which a result of an electron diffraction analysis was obtained. FIG. 13B is an electron diffraction image obtained by TEM for the part of the electrode shown in FIG. 13A. FIG. 13B shows an electron diffraction result obtained for the region indicated by the white broken line in FIG. 13A. As shown in FIG. 12, it is understood that an LDH is present on the surface of a part of the Ni mesh in the electrode according to Comparative Example 2. As shown in FIG. 13A and FIG. 13B, LDH-derived lattice spacings of 0.14 nm, 0.17 nm, 0.19 nm, and 0.22 nm were observed, and diffraction interference fringes consistent with (113), (110), (015), and (012) of the LDH were observed, respectively. Thus, it was confirmed that the LDH was present on the Ni mesh surface. It can be understood that the LDH is formed on the surface of the Ni mesh even under a condition where no chelating agent is added. In FIG. 12, it can be confirmed that there are many voids in the layer including the LDH.

[Evaluation by Fourier Transform Infrared Spectrometry (FT-IR)]

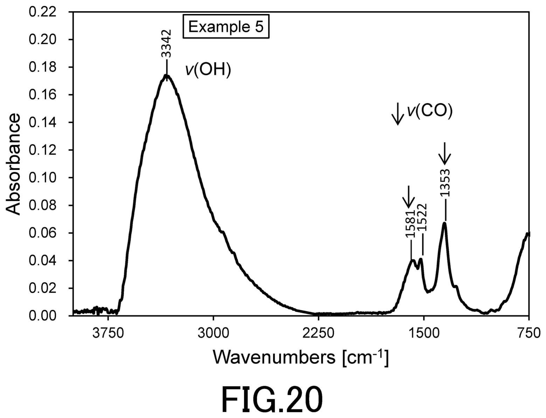

FIG. 20 shows a Fourier transform infrared spectrum chart of the electrode according to Example 5, which was performed using a FT-IR instrument Continuum manufactured by Thermo Fisher Scientific under a requirement of 32 cumulative measurements in order to evaluate the presence of ACAC for the sample obtained from the electrode according to Example 5. As a result, absorption peaks were observed in the vicinity of wavenumbers 1581 cm$^{-1}$ and 1353 cm$^{-1}$ for the sample obtained from the electrode according to Example 5. As shown in FIG. 3(a) of the following literature, molecules chelated with ACAC have absorption peaks at wavenumbers of approximately 1575 cm$^{-1}$ and 1380 cm$^{-1}$ in the Fourier transform infrared spectroscopy (FT-IR) spectrum. Thus, these peaks are absorption peaks originating from ACAC coordinated to Fe and Ni. From the above results of Example 5, it can be inferred that the electrodes for other Examples 1 to 4, each prepared by adding ACAC, also include ACAC.

Apuchu R. Sangtam et al."Synthesis and characterization of Co(II)-Co(III) LDH and Ac@Co(II)-Co(III) LDH nanohybrid and study of its application as bactericidal agents", Results in Chemistry 2022, 4 , 100671.

[Evaluation of electrode]

The oxygen evolution reaction (OER) overpotentials of the electrode according to the respective Examples and Comparative Examples 2 and 3 were evaluated. The following equipment was used for the measurements: a VersaSTAT4, potentiostat manufactured by Princeton Applied Research; an alkali sample vial (200 ml) manufactured by BAS Inc.; a Teflon (registered trademark) cap (200 ml) manufactured by BAS Inc.; and a plate electrode AE-2 manufactured by EC FRONTIER CO., LTD., as a working electrode jig. The electrodes as working electrodes according to the respective Examples and Comparative Examples 2 and 3 were fixed to the jig. As the counter electrode, a double platinum wire counter electrode (D.6.0305.200J) manufactured by Metrohm AG was used. The current derived from the anode reaction of the water electrolysis cell was measured using the three-electrode method under the following measurement conditions. The anode reaction is the oxygen evolution reaction.

(Measurement conditions)

Solution: 1M KOH solution
Start potential to reversible hydrogen electrode (RHE): 1.0 V
Vertex potential relative to reversible hydrogen electrode (RHE): 1.55 V to 1.7 V
Number of cycles: 5 cycles
Rate of potential sweep: 10 mV/sec
Temperature: 25°C

The OER overpotential was determined by subtracting a theoretical potential of 1.229 V required to drive the oxygen evolution reaction from the voltage corresponding to the current density of 10 mA/cm$^2$ in the fifth cycle. The results are shown in Table 1. Table 1 shows a molar ratio of the Fe ion content to the Ni content in the Ni substrate as a Ni mesh or a Ni plate in production of an electrode, as well as a value obtained by dividing a content of the Fe ion on a molar basis by the surface area of the Ni substrate. Table 1 also shows whether the chelating agent solution including the Ni substrate was shaken/stirred before the addition of POX, and whether the electrode was successfully produced.

From the measurement results for evaluation of the OER overpotential, the coverage of the layer including the LDH to the surface of the Ni substrate was determined based on the following Formula (3). The results are shown in Table 1. In Formula (3), $S_{NiOx}$ is an integral value of the current density at a potential in a range of 1.38 V to 1.48 V, and $S_{Ni}$ is an integral value of the current density at a potential in a range of 1.35 V to 1.38 V. The peak in the current density at potentials in a range of 1.38 V to 1.48 V is a peak derived from the hydroxides of iron and nickel, while the peak in the current density in a range of 1.35 V to 1.38 V is a peak derived from pure nickel.

$$\text{Coverage} = S_{NiOx}/(S_{Ni} + S_{NiOx}) \times 100 \qquad \text{Formula (3)}$$

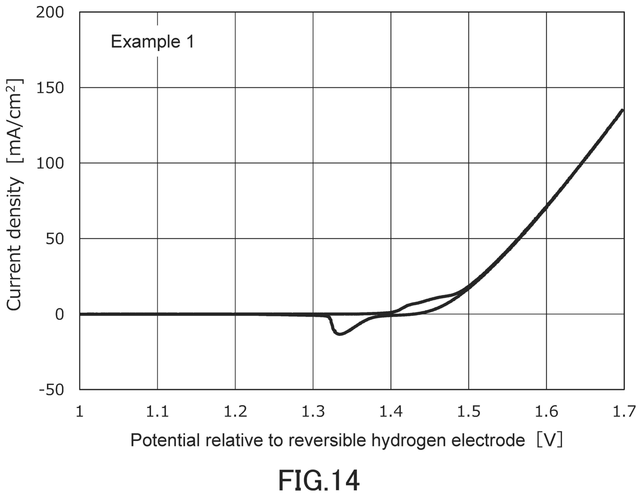

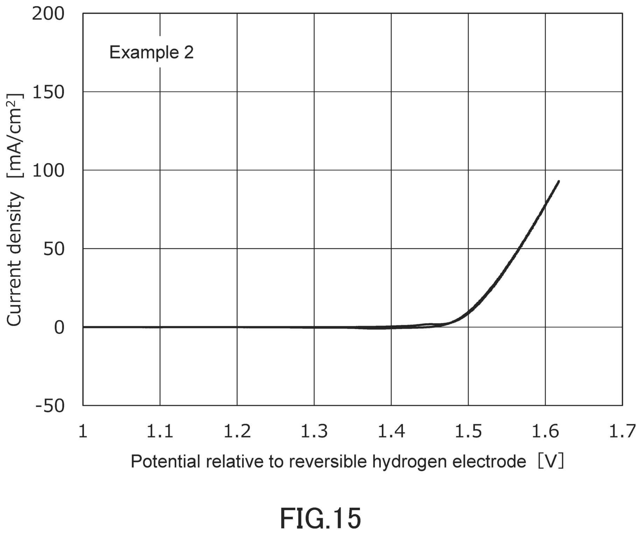

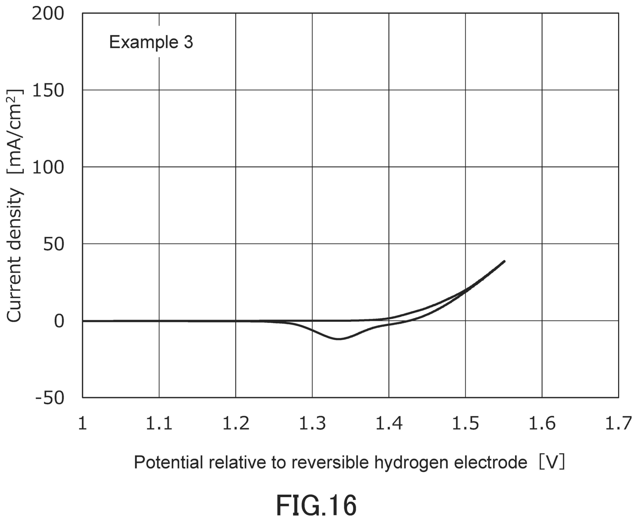

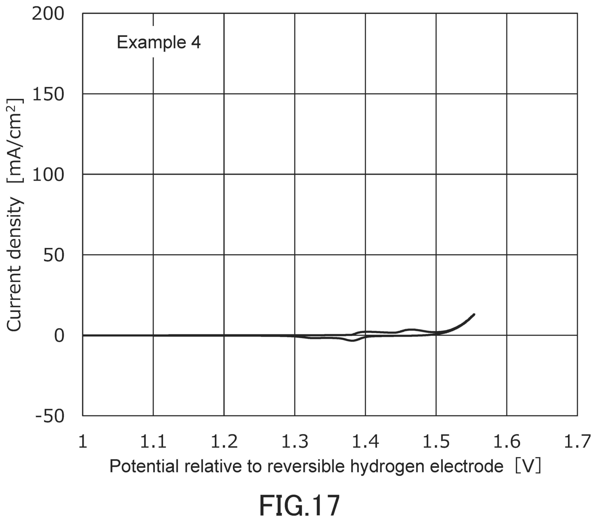

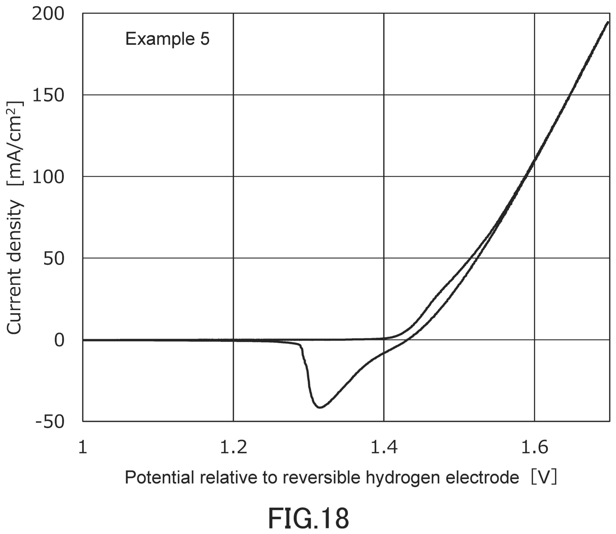

FIG. 14 to FIG. 18 are graphs showing measurement results for OER overpotentials of the electrodes according to Examples 1 to 5. In each graph, the horizontal axis indicates a potential and the vertical axis indicates a current density. In the electrodes according to Examples 1, 3, and 5, in the sweep involving reduction from 1.4 V to 1.3 V, a peak associated with the reduction reaction from $Ni^{3+}$ to $Ni^{2+}$ is confirmed. On the other hand, such a peak is hardly observed for the electrodes of Examples 2 and 4. This indicates that in the electrodes according to Examples 2 and 4, the portion of the layer including the LDH capable of functioning as an electrode is very small. For example, in the case of Example 2, there are numbers of gaps in the LDH on the surface of the Ni substrate, as shown in FIG. 10, and thus, it can be understood that effective LDH electrically connected to the Ni substrate is unlikely to be present.

In the measurement of OER overpotential, for the electrode according to Example 1, it was not observed that the layer including the LDH was desorbed into the KOH solution. On the other hand, for the electrode according to Comparative Example 2, the surface of the electrode turned black during the measurement of the OER overpotential, and thus, it was confirmed that a substance of the same color as the electrode appeared and precipitated in the KOH solution. Therefore, in the electrode according to Example 1 including the ACAC, it is considered that the detachment of the layer including the LDH from the electrode is suppressed. In the electrode according to Comparative Example 2, it was clearly confirmed that the layer including the LDH was peeled off from the electrode, and thus, it is considered that in the electrode according to Comparative Example 2, the portion that effectively contributes to electrode performance is small in the layer including the LDH.

Comparing Example 4 with Comparative Example 1, if the molar ratio of the content of the Fe ions to the content of Ni in the Ni substrate is large, a chemical reaction to dissolve the Ni becomes intense, and the entire Ni substrate dissolves, making it impossible to produce an electrode. For this reason, it is understood that the molar ratio of the content of Fe ions to the content of Ni in the Ni substrate is desirably 0.75 or less. In addition, it is understood that the value obtained by dividing the content of Fe ions on a molar basis by the surface area of the Ni substrate is desirably 0.29 mmol/cm$^2$ or less.

As shown in Table 1, the OER overpotentials of the electrodes according to Examples 1 and 3 are particularly low. Therefore, from the viewpoint of electrode activity, it was suggested that the molar ratio of the content of Fe ions to the content of Ni included in the Ni substrate be more desirably in a range of 0.05 to 0.25. In addition, it was suggested that the value obtained by dividing the content of Fe ions on a molar basis by the surface area of the Ni substrate be more desirably in a range of 0.01 mmol/cm$^2$ to 0.1 mmol/cm$^2$.

[Evaluation of electrode durability]

The OER overpotentials of the electrodes according to of Examples 1 and 2 and Comparative Examples 2 and 3 were measured for 1000 cycles to evaluate the durability of the electrodes. The following equipment was used for the measurements: a VersaSTAT4 potentiostat manufactured by Princeton Applied Research; an alkali sample vial (200 ml) manufactured by BAS Inc.; a Teflon (registered trademark) cap (200 ml) manufactured by BAS Inc.; and a plate electrode AE-2 manufactured by EC FRONTIER CO., LTD. as the working electrode jig. The electrodes as working electrodes according to Example 1 and 2 and Comparative Examples 2 and 3 were fixed to the jig. As the counter electrode, a double platinum wire counter electrode (D.6.0305.200J) manufactured by Metrohm AG was used. The current derived from the anode reaction of the water electrolysis cell was measured using the three-electrode method under the following measurement conditions. The anode reaction is the oxygen evolution reaction.

(Measurement conditions)

Solution: 1M KOH solution
Potential relative to RHE: 1.0 V to 1.7 V
Maximum number of cycles: 1000 cycles
Rate of potential sweep: 100 mV/sec
Temperature: 25°C

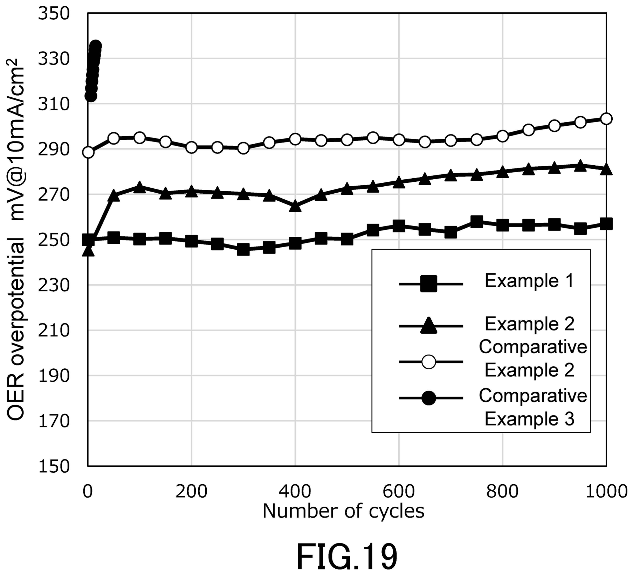

FIG. 19 is a graph showing a relation between OER overpotentials and the number of cycles for the electrodes according to Example 1 and 2 and the electrodes according to Comparative Examples 2 and 3. In this graph, the OER overpotential for every 50 cycles is shown. Each cycle simulates the operation and suspension of water electrolysis.

Comparing Example 1 with Example 2, the OER overpotential of the electrode according to Example 1 does not rise by the 50th cycle. On the other hand, the OER overpotential of the electrode according to Example 2 rises before the 50th cycle. Therefore, from the viewpoint of electrode durability, it is apparently important to promote mixing of the solution in a state where the Ni substrate is immersed in the chelating agent solution by shaking and stirring the chelating agent solution including the Ni substrate, before adjusting the solution to be alkaline.

As to Comparative Example 3, the OER overpotential rose from the beginning, therefore it is understood that the LDH formed on the surface of the Ni substrate can function to suppress electrode degradation.

Many modifications and other embodiments of the present disclosure will be apparent to those skilled in the art with reference to the above description. Therefore, the above description should be interpreted only as an example, and is provided for the purpose of teaching those skilled in the art the best manner to carry out the present disclosure. The operating conditions, the composition, the structure and/or the function can be substantially modified without departing from the spirit of the present disclosure.

[Table 1]

| | ACAC | Molar ratio of Fe ion content substrate to Ni content in Ni substrate | Fe ion content / Ni substrate surface area [mmol/cm$^2$] | Shaking and stirring solution including Fe ion and chloride ion with Ni substrate before pH rise | Electrode production | Coverage [%] | OER overpotential [mV] |
|---|---|---|---|---|---|---|---|
| Example 1 | Added | 0.25 | 0.0942 | Performed | Possible | 99.7 | 253 |
| Example 2 | Added | 0.25 | 0.0942 | Not performed | Possible | 98.4 | 272 |
| Example 3 | Added | 0.05 | 0.0188 | Performed | Possible | 99.4 | 244 |
| Example 4 | Added | 0.75 | 0.2844 | Performed | Possible | 58.5 | 318 |
| Example 5 | Added | 0.04 | 0.073 | Performed | Possible | 99.4 | 228 |
| Comparative Example 1 | Added | 2.9 | 1.0919 | Performed | Impossible | - | - |
| Comparative Example 2 | Not added | 0.25 | 0.0942 | Performed | Possible | - | 289 |
| Comparative Example 3 | Not added | - | - | Not performed | Possible | - | 352 |

INDUSTRIAL APPLICABILITY

A water electrolysis electrode of the present disclosure can be used as an anode or a cathode for water electrolysis.

**Claims**

1. A water electrolysis electrode, comprising:

   a sheet-shaped conductive substrate; and
   a layered double hydroxide layer including two or more transition metals and disposed on a surface of the conductive substrate, wherein
   the layered double hydroxide layer includes a chelating agent.

2. The water electrolysis electrode according to claim 1, wherein
   the two or more transition metals comprise at least two selected from the group consisting of V, Cr, Mn, Fe, Co, Ni, Cu, W, and Ru.

3. The water electrolysis electrode according to claim 2, wherein
   the two or more transition metals comprise at least one selected from the group consisting of Ni and Fe.

4. The water electrolysis electrode according to any one of claims 1 to 3, wherein the chelating agent comprises at least one selected from the group consisting of acetylacetone and a citrate.

5. The water electrolysis electrode according to any one of claims 1 to 4, wherein the layered double hydroxide layer has a thickness of 35 nm or more.

6. The water electrolysis electrode according to any one of claims 1 to 5, wherein the surface of the layered double hydroxide layer is composed of nickel.

7. The water electrolysis electrode according to claim 6, wherein

the nickel has purity of 90 mass% or more.

8. The water electrolysis electrode according to any one of claims 1 to 7, wherein the conductive substrate has a porous structure.

9. A water electrolysis cell comprising:

an anode;
a cathode; and
a separator, wherein
at least one selected from the group consisting of the anode and the cathode comprises the water electrolysis electrode according to any one of claims 1 to 8.

10. A water electrolysis cell comprising:

an anode;
a cathode; and
an anion-exchange membrane, wherein
at least one selected from the group consisting of the anode and the cathode comprises the water electrolysis electrode according to any one of claims 1 to 8.

11. A water electrolysis device comprising:

the water electrolysis cell according to claim 9 or 10; and
a voltage applicator configured to apply a voltage between the cathode and the anode.

12. A method for manufacturing a water electrolysis electrode, the method comprising: adjusting a solution to be alkaline with a sheet-shaped conductive substrate immersed in the solution, where the solution includes a chelating agent and two or more transition metal ions.

13. The method according to claim 12, comprising increasing pH of the solution.

14. The method according to claim 12 or 13, wherein
the two or more transition metal ions comprise ions of two or more transition metals selected from the group consisting of V, Cr, Mn, Fe, Co, Ni, Cu, W, and Ru.

15. The method according to claim 14, wherein
the two or more transition metal ions comprise an ion of at least one transition metal selected from the group consisting of Ni and Fe.

16. The method according to any one of claims 12 to 15, wherein
the surface of the conductive substrate is composed of nickel.

17. The method according to claim 15 or 16, wherein

the conductive substrate comprises nickel;
the two or more transition metal ions comprise an Fe ion;
the solution comprises a chloride ion; and
the method further comprising promoting of mixing of the solution prior to adjustment of the solution to be alkaline with the conductive substrate immersed in the solution.

18. The method according to claim 17, wherein
a molar ratio of a content of Fe ion to a content of Ni included in the conductive substrate is 0.75 or less.

19. The method according to claim 17, wherein
a molar ratio of a content of Fe ion to a content of Ni included in the conductive substrate is in a range of 0.05 to 0.25.

20. The method according to claim 17, wherein

a value obtained by dividing a content of Fe ion on a molar basis by a surface area of the conductive substrate is 0.29 mmol/cm$^2$ or less.

21. The method according to claim 17, wherein
a value obtained by dividing a content of Fe ion on a molar basis by a surface area of the conductive substrate is in a range of 0.01 mmol/cm$^2$ to 0.1 mmol/cm$^2$.

22. The method according to any one of claims 12 to 21, wherein
the chelating agent comprises at least one selected from the group consisting of acetylacetone and a citrate.

FIG.1

⊘ : $M_1^{2+}$    ● : $M_2^{3+}$    ○ : $OH^-$

▨ : $A^{n-}$    ◍ : $H_2O$

FIG.2

## FIG.3

2

2b

2a

2s    2n    2p    2m

# FIG.4

3

40

2b

2a

2

2s    2n    2p    2m

# FIG.5

FIG.6

FIG.7

FIG.8

FIG.9A

FIG.9B

FIG.10

LDH

Ni mesh

10 nm

FIG.11A

LDH

0.14 nm
0.17 nm
0.19 nm
0.22 nm

FIG.11B

C Protective film

LDH

Ni mesh

100 nm

FIG.12

FIG.13A

FIG.13B

FIG.14

FIG.15

FIG.16

FIG.17

FIG.18

FIG.19

FIG.20

## INTERNATIONAL SEARCH REPORT

| International application No. |
| --- |
| **PCT/JP2023/023433** |

| A. | CLASSIFICATION OF SUBJECT MATTER |
| --- | --- |

*C25B 9/00*(2021.01)i; *C25B 1/04*(2021.01)i; *C25B 11/052*(2021.01)i
FI:　C25B9/00 A; C25B1/04; C25B11/052

According to International Patent Classification (IPC) or to both national classification and IPC

| B. | FIELDS SEARCHED |
| --- | --- |

Minimum documentation searched (classification system followed by classification symbols)

　　C25B9/00; C25B1/04; C25B11/052

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

　　Scopus

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-139027 A (DE NORA PERMELEC LTD. ) 16 September 2021 (2021-09-16) | 1-3, 5-11 |
| | example 1, claims, paragraphs [0037], [0044] | |
| A | | 4, 12-22 |
| X | WO 2022/014377 A1 (PANASONIC INTELLECTUAL PROPERTY MANAGEMENT CO., LTD.) 20 January 2022 (2022-01-20) | 1-11 |
| | example 1, claims, paragraphs [0064], [0067], [0081]-[0084], [0094]-[0096], fig. 4 | |
| Y | | 1-16, 22 |
| A | | 17-21 |
| X | US 2022/0259748 A1 (RESEARCH & BUSINESS FOUNDATION SUNGKYUNKWAN UNIVERSITY) 18 August 2022 (2022-08-18) | 1-3, 5-8, 12-16 |
| | example 1, paragraph [0155], claims | |
| Y | | 9-11 |
| A | | 4, 17-22 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 August 2023** | **29 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| :--- |
| **PCT/JP2023/023433** |

### C. DOCUMENTS CONSIDERED TO BE RELEVANT

| Category* | Citation of document, with indication, where appropriate, of the relevant passages | Relevant to claim No. |
| :---: | :--- | :---: |
| Y | CN 114959791 A (HEBEI UNIVERSITY OF TECHNOLOGY) 30 August 2022 (2022-08-30) example 1, fig. 3, claims, paragraph [0004] | 1-5, 8-15, 22 |
| A | | 6-7, 16-21 |
| Y | US 2023/0010138 A1 (UNIVERSITY OF HOUSTON SYSTEM) 12 January 2023 (2023-01-12) examples, claims | 1-16, 22 |
| A | | 17-21 |

Form PCT/ISA/210 (second sheet) (January 2015)

**INTERNATIONAL SEARCH REPORT**
Information on patent family members

International application No.

**PCT/JP2023/023433**

| Patent document<br>cited in search report | | | Publication date<br>(day/month/year) | Patent family member(s) | | | Publication date<br>(day/month/year) |
|---|---|---|---|---|---|---|---|
| JP | 2021-139027 | A | 16 September 2021 | US 2023/0109702 A1<br>example 1, claims, paragraphs [0058], [0068]<br>EP 4119700 A1<br>CN 115244220 A<br>KR 10-2022-0136465 A | | | |
| WO | 2022/014377 | A1 | 20 January 2022 | US 2023/0121007 A1<br>example 1, claims, paragraphs [0086], [0090], [0105]-[0108], [0118]-[0120] , fig. 4<br>CN 115812007 A | | | |
| US | 2022/0259748 | A1 | 18 August 2022 | KR 10-2022-0111791 A | | | |
| CN | 114959791 | A | 30 August 2022 | (Family: none) | | | |
| US | 2023/0010138 | A1 | 12 January 2023 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020012171 A

- JP 2021139027 A

**Non-patent literature cited in the description**

- **SEYEONG LEE et al.** Operational durability of three-dimensional Ni-Fe layered double hydroxide electrocatalyst for water oxidation. *Electrochimica Acta*, 2019, vol. 315, 94-101
- **JIANDE CHEN et al.** Interfacial Interaction between FeOOH and Ni-Fe LDH to Modulate the Local Electronic Structure for Enhanced OER Electrocatalysis. *ACS Catalysis*, 2018, vol. 8, 11342-11351

- **APUCHU R. SANGTAM et al.** Synthesis and characterization of Co(II)-Co(III) LDH and Ac@-Co(II)-Co(III) LDH nanohybrid and study of its application as bactericidal agents. *Results in Chemistry*, 2022, vol. 4, 100671